# EUROPÄISCHE PATENTSCHRIFT

(11) **EP 3 462 004 B1**
(45) Veröffentlichungstag und Bekanntmachung des Hinweises auf die Patenterteilung: **27.11.2019**
(21) Anmeldenummer: 18189690.3
(22) Anmeldetag: 20.08.2018
(51) Int. Cl.: F01P 7/16, F16D 35/02

(54) **TECHNIK ZUR KÜHLUNG FÜR EINE BRENNKRAFTMASCHINE**
TECHNIC FOR ENGINE COOLING
TECHNIQUE DE REFROIDISSEMENT D'UN MOTEUR

(30) Priorität: 29.09.2017 DE 102017122700
(43) Veröffentlichungstag der Anmeldung: 03.04.2019
(73) Patentinhaber: MAN Truck & Bus SE, 80995 München (DE)
(72) Erfinder: Schydlo, Alexander, 81243 München (DE); Martens, Robert, 85757 Karlsfeld (DE)
(74) Vertreter: v. Bezold & Partner Patentanwälte - PartG mbB

(56) Entgegenhaltungen:
- EP-A2- 0 641 947
- DE-A1- 4 118 684
- DE-A1- 4 335 342
- US-B1- 6 481 390

## Beschreibung

Die Erfindung betrifft eine Brennkraftmaschine, beispielsweise zum Antrieb eines Kraftfahrzeugs. Insbesondere ist eine Technik zur Kühlung einer Visco-Kupplung der Brennkraftmaschine beschrieben.

Bei Kraftfahrzeugen, insbesondere Nutzfahrzeugen, werden Visco-Kupplungen eingesetzt, um eine Kühlflüssigkeitspumpe des Kühlflüssigkeitskreislaufs der Brennkraftmaschine regelbar anzutreiben. Eine an die Brennkraftmaschine starr gekoppelte Kühlflüssigkeitspumpe eines Lastkraftwagens (LKW) würde eine durchschnittliche Leistungsaufnahme von beispielsweise 7 kW aufweisen. Die volle Leistung der Kühlflüssigkeitspumpe ist (beispielsweise bei horizontaler Fahrstrecke und hoher Fahrgeschwindigkeit) oft nicht notwendig für einen hinreichenden Wärmeabfluss durch die Kühlflüssigkeit der Brennkraftmaschine. Durch eine bedarfsangepasste Regelung der Kühlflüssigkeitspumpe können beispielsweise zwischen 0,5 und 1,5 Prozent des Treibstoffs eingespart werden. Ein Beispiel einer solchen herkömmlichen Regelung der Kühlflüssigkeitspumpe ist im Artikel "Einfach mal abschalten" der Frankfurter Allgemeinen Zeitung vom 29. April 2013 beschrieben. EP 0 641 947 A2 zeigt ebenfalls eine abschaltbare Kühlflüssigkeitspumpe.

Die Visco-Kupplung einer regelbaren Kühlflüssigkeitspumpe nutzt die regelbare Drehmomentübertragung der Visco-Kupplung. Die Drehmomentübertragung basiert auf den Flüssigkeitseigenschaften eines Kupplungsfluids in der Visco-Kupplung. Beispielsweise dient zähes Silikonöl als Kupplungsfluid. Durch die unterschiedlichen Drehzahlen zwischen Antriebswelle und Abtriebswelle der Visco-Kupplung wird das Kupplungsfluid geschert, und die Scherkräfte übertragen mittels des Kupplungsfluids das Drehmoment von der Antriebswelle zur Abtriebswelle. Da die Scherkräfte auf der Viskosität, d.h. der inneren Reibung, des Kupplungsfluids beruhen, ist die Drehmomentübertragung der Visco-Kupplung mit Energiedissipation verbunden, die als Wärme sowohl nach innen (d.h. ins Kupplungsfluid) als auch nach außen (d.h. über ein Gehäuse der Visco-Kupplung an die Umgebung) übertragen wird. Jedoch verschlechtert der innere Wärmeeintrag die hydraulischen Eigenschaften des Kupplungsfluids, da typischerweise die Viskosität und der Wirkungsgrad der Drehmomentübertragung mit steigender Temperatur des Kupplungsfluids abnehmen. Somit ist der Regelbereich einer herkömmlichen Visco-Kupplung insbesondere bei hohen Motordrehzahlen eingeschränkt, um die Lebensdauer der Visco-Kupplung nicht zu verkürzen. Dies kann zu der paradoxen Regelungssituation führen, dass die regelbare Visco-Kupplung bei hoher Motordrehzahl nicht für eine reduzierte Drehzahl der Kühlflüssigkeitspumpe geregelt werden kann, um eine Überhitzung der Visco-Kupplung zu verhindern. Das heißt die Kühlflüssigkeitspumpe muss mit einer Leistung betrieben werden, die zur Kühlung der Brennkraftmaschine gar nicht notwendig wäre.

Alternative Maßnahmen zur Kühlung der Visco-Kupplung, wie beispielsweise die Vergrößerung einer Berippung am Gehäuse der Visco-Kupplung sind nicht zielführend. Zum einen wird durch die größere Berippung die rotierende Masse der Visco-Kupplung erhöht und der notwendige Bauraum vergrößert. Andererseits ist gerade diese Luftkühlung unzureichend, da die Kühlflüssigkeitspumpe bei hoher Motorlast zugeschaltet wird, wodurch die hinter dem Radiator angeordnete Visco-Kupplung von der ebenfalls erhöhten Temperatur der Kühlluft überstrichen wird.

Somit besteht die Aufgabe, eine Brennkraftmaschine mit einer energieeffizienteren Kühlung bereitzustellen. Eine Alternative oder weitere Aufgabe ist die Regelbarkeit der Visco-Kupplung ohne Einschränkung der Lebensdauer der Visco-Kupplung zu erhöhen. Eine Alternative oder weitere Aufgabe ist, unabhängig von der mechanischen Belastung der Visco-Kupplung und Umgebungstemperaturen eine möglichst konstante Temperatur des Kupplungsfluids sicherzustellen.

Diese Aufgabe oder Aufgaben werden durch eine Brennkraftmaschine und ein entsprechendes Kraftfahrzeug mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt der Erfindung wird eine Brennkraftmaschine bereitgestellt. Die Brennkraftmaschine umfasst einen Kühlflüssigkeitskreislauf, der an einem Zylinderkopf und/oder einem Motorblock der Brennkraftmaschine angeschlossen oder anschließbar ist. Der Kühlflüssigkeitskreislauf umfasst eine Kühlflüssigkeitspumpe, die eine Antriebswelle umfasst und dazu ausgebildet ist, Kühlflüssigkeit im Kühlflüssigkeitskreislauf zu fördern. Ferner umfasst die Brennkraftmaschine eine Visco-Kupplung, die zum Antrieb durch die Brennkraftmaschine angeordnet oder anordenbar ist, ein Kupplungsfluid zur Drehmomentübertragung umfasst und abtriebsseitig mit der Antriebswelle der Kühlflüssigkeitspumpe verbunden ist. Die Antriebswelle der Kühlflüssigkeitspumpe umfasst mindestens ein Wärmerohr, das mit dem Kupplungsfluid als Wärmequelle und der Kühlflüssigkeit als Wärmesenke in Wärmeaustausch steht oder bringbar ist.

Indem mindestens ein Wärmerohr in der Antriebswelle der regelbaren Kühlflüssigkeitspumpe vorhanden ist, kann der Abwärmestrom von dem Kupplungsfluid als Wärmequelle zur Kühlflüssigkeit als Wärmesenke wirksam übertragen werden.

Mindestens ein Wärmerohr kann durch eine Längsbohrung in der Antriebswelle als gekapselte Einheit eingesetzt sein. Alternativ oder ergänzend kann mindestens ein Wärmerohr integraleinstückig mit der Antriebswelle in einer Längsbohrung der Antriebswelle realisiert sein.

Das Kupplungsfluid kann ein Öl, beispielsweise Silikonöl, umfassen. Das Kupplungsfluid kann als hydrodynamisches Arbeitsmedium bestimmte hydraulische Eigenschaften zur Drehmomentübertragung aufweisen, beispielsweise eine bestimmte temperaturabhängige Viskosität.

Die Kühlflüssigkeit kann Wasser, ein Frostschutzmittel und/oder ein Korrosionsschutzmittel umfassen.

Die Visco-Kupplung kann von Kupplungsfluid umspülte Lamellen umfassen. Die Lamellen können drehfest mit der Antriebswelle verbunden sein. Über die Lamellen kann das Wärmerohr in Wärmeaustausch mit dem Kupplungsfluid als Wärmequelle stehen. Beispielsweise sind die Lamellen an einem kupplungsseitigen Ende der Antriebswelle umlaufend angeordnet. Ein wärmequellseitiges Ende des Wärmerohrs kann dem kupplungsseitigen Ende der Antriebswelle entsprechen.

Die Kühlflüssigkeitspumpe kann ein von der Kühlflüssigkeit umspültes Laufrad (beispielsweise ein Flügelrad) umfassen. Das Laufrad kann drehfest mit der Antriebswelle verbunden sein. Über das Laufrad kann das Wärmerohr in Wärmeaustausch mit der Kühlflüssigkeit als Wärmesenke stehen. Beispielsweise ist das Laufrad an einem pumpenseitigen Ende der Antriebswelle umlaufend angeordnet. Ein wärmesenkenseitiges Ende des Wärmerohrs kann dem pumpenseitigen Ende der Antriebswelle entsprechen.

Der Kühlflüssigkeitskreislauf kann ferner einen Radiator und einen Thermostat umfassen. Die Kühlflüssigkeitspumpe kann eingangsseitig mit dem Radiator und/oder dem Thermostat verbunden sein. Die Kühlflüssigkeitspumpe kann ausgangsseitig mit dem Zylinderkopf und/oder dem Motorblock verbunden sein. Der Radiator und/oder der Thermostat können stromabwärts im Kühlflüssigkeitskreislauf zum Motorblock angeordnet sein.

Das Wärmerohr kann eine Kapillare oder mehrere Kapillaren umfassen, die sich in Längsrichtung der Antriebswelle erstrecken, beispielsweise vom kupplungsseitigen Ende zum pumpenseitigen Ende der Antriebswelle. Vorzugsweise kann die Kapillare oder mindestens eine der Kapillaren koaxial zur Antriebswelle angeordnet sein. Alternativ oder ergänzend kann das Wärmerohr eine Vielzahl von Kapillaren umfassen (beispielsweise durch eine poröse Struktur) und koaxial in der Antriebswelle angeordnet sein. Durch die koaxiale Anordnung können Zentrifugalkräfte auf das Wärmerohr minimiert oder ausgeschlossen werden.

Das Wärmerohr (beispielsweise die mindestens eine Kapillare) kann ein Kühlmedium (kurz: Medium) umfassen. Das Kühlmedium kann dazu ausgebildet sein, durch Wärmekontakt mit der Wärmequelle (beispielsweise am kupplungsseitigen Ende der Antriebswelle) zu verdampfen und durch Wärmekontakt mit der Wärmesenke (beispielsweise am pumpenseitigen Ende der Antriebswelle) zu kondensieren. Das Wärmerohr kann ein geschlossenes System sein, welche das Kühlmedium beinhaltet. Das Kühlmedium kann beispielsweise Wasser oder Ammoniak umfassen. Das Kühlmedium kann durch Kapillarkräfte im flüssigen Aggregatszustand von der Wärmesenke (beispielsweise dem pumpenseitigen Ende der Antriebswelle) zur Wärmequelle (beispielsweise dem kupplungsseitigen Ende der Antriebswelle) fließen, beispielsweise in den Kapillaren oder der porösen Struktur.

Das Strömen des Kühlmediums im gasförmigen Zustand von der Wärmequelle zur Wärmesenke kann vom Rückfluss des Kühlmediums im flüssigen Aggregatszustand räumlich entkoppelt sein. Beispielsweise kann das Wärmerohr einen zentrifugalkraftfreien Kondensationskanal (der koaxial in der Antriebswelle angeordnet ist) und einen den Kondensationskanal umgebenden Dampfkanal umfassen.

Ein Wärmewiderstand einer Wärmeleitung im Metall der Antriebswelle kann mehrfach größer sein als ein Wärmewiderstand eines Wärmetransports im Wärmerohr. Beispielsweise können durch die Koexistenz einer flüssigen und einer gasförmigen Phase des Kühlmediums im Wärmerohr das kupplungsseitige Ende der Antriebswelle und das pumpenseitige Ende der Antriebswelle nahezu isotherm sein.

Ferner kann die Vorrichtung eine Steuereinheit umfassen, die einen Kupplungsgrad der Visco-Kupplung steuert. Beispielsweise kann der Kupplungsgrad abhängig von einer Temperatur der Kühlflüssigkeit und/oder einem Temperaturgradienten im Motorblock und/oder dem Zylinderkopf geregelt werden.

Eine Wärmekapazität der Kühlflüssigkeit kann mehrfach größer als eine Wärmekapazität des Kupplungsfluids sein. Aufgrund der ungleichen Wärmekapazitäten und des geringen Wärmewiderstands des Wärmerohrs kann die Temperatur des Kupplungsfluids der Temperatur der Kühlflüssigkeit folgen bzw. nahezu entsprechen. Eine Regelung der Kühlflüssigkeit kann eine Regelung des Kupplungsfluids implizieren.

Durch die thermische Anbindung des Kupplungsfluids an die geregelte Temperatur der Kühlflüssigkeit über das mindestens eine Wärmerohr kann ein hitzebedingter Abfall der Viskosität - und damit der Drehmomentübertragung - in der Visco-Kupplung verhindert werden. Somit kann ein Regelungsbereich der regelbaren Visco-Kupplung gegenüber einer herkömmlichen luftgekühlten Visco-Kupplung vergrößert sein, beispielsweise den gesamten Drehzahlbereich der Brennkraftmaschine umfassen.

Gemäß einem weiteren Aspekt ist ein Fahrzeug, beispielsweise ein Landfahrzeug oder ein Wasserfahrzeug bereitgestellt, das eine Brennkraftmaschine gemäß einer Ausführung des vorgenannten Aspekts umfasst. Das Landfahrzeug kann insbesondere ein Nutzfahrzeug, beispielsweise ein Bus, ein Lastkraftwagen oder eine Zugmaschine, sein.

Weitere Merkmale und Vorteile der Erfindung werden im Folgenden unter Bezugnahme auf die beigefügten Zeichnungen beschrieben. Es zeigen:
- Figur 1: ein schematisches Blockschaltbild eines ersten Ausführungsbeispiels einer Brennkraftmaschine;
- Figur 2: ein schematisches Blockschaltbild eines zweiten Ausführungsbeispiels der Brennkraftmaschine; und
- Figur 3: ein Drehzahldiagramm zur Regelung einer regelbaren Visco-Kupplung, die in jedem Ausführungsbeispiel implementierbar ist.

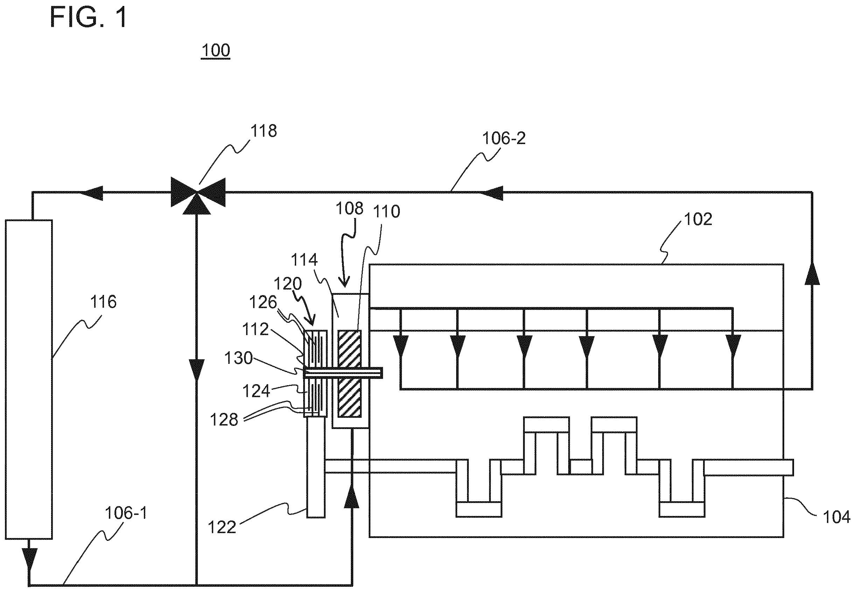

Figur 1 zeigt ein erstes Ausführungsbeispiel einer allgemein mit Bezugszeichen 100 bezeichneten Brennkraftmaschine. Die Brennkraftmaschine 100 umfasst einen Zylinderkopf 102 und einen Motorblock 104, die an einen allgemein mit Bezugszeichen 106 bezeichneten Kühlflüssigkeitskreislauf angeschlossen sind. Die Brennkraftmaschine 100 umfasst ferner eine Kühlflüssigkeitspumpe 108, die eingangsseitig mit einem Zulauf 106-1 des Kühlflüssigkeitskreislaufs 106 verbunden ist. Ausgangsseitig steht die Kühlflüssigkeitspumpe 108 in Fluidverbindung mit Kühlleitungen im Zylinderkopf 102 und im Motorblock 104.

Die Kühlflüssigkeitspumpe 108 umfasst in einem Pumpengehäuse ein Laufrad 110 (beispielsweise ein Flügelrad oder einen Propeller) auf einer Antriebswelle 112. Laufrad 110 und ein pumpenseitiges Ende der Antriebswelle 112 sind in eine Kühlflüssigkeit 114 des Kühlflüssigkeitskreislaufs 106 getaucht, die das Pumpengehäuse füllt. Die Kühlflüssigkeit 114 umfasst beispielsweise Wasser mit Zusatzstoffen zur Gefrierpunktserhöhung und Viskositätsverringerung.

Die regelbare Drehzahl der Kühlflüssigkeitspumpe 108 bestimmt die je Zeiteinheit im Kühlflüssigkeitskreislauf 106 zirkulierende Menge der Kühlflüssigkeit 114. Der Kühlflüssigkeitskreislauf 106 umfasst an seinem relativ zum Zulauf 106-1 heißen Rücklauf 106-2 stromabwärts des Motorblocks 104 einen Radiator 116. Optional umfasst der Kühlflüssigkeitskreislauf 106 ferner einen Thermostat 118. Der Thermostat 118 bestimmt einen Anteil der durch den Radiator 116 strömenden Kühlflüssigkeit 114 an der durch die Brennkraftmaschine insgesamt zirkulierenden Kühlflüssigkeit 114.

Die Antriebswelle 112 ist mit dem Abtrieb einerVisco-Kupplung 120 gekoppelt, die zum Antrieb 122 durch die Brennkraftmaschine 100 angeordnet ist. Der Antrieb 122 der Visco-Kupplung 120 kann ein Getriebe mit festem Übersetzungsverhältnis zur Kurbelwelle der Brennkraftmaschine 100 umfassen. Die Visco-Kupplung 120 umfasst ein Kupplungsfluid 124, dessen Viskosität das antriebsseitig an Außenlamellen 128 anliegende Drehmoment auf Innenlamellen 126 überträgt. Die Innenlamellen 126 sind an einem kupplungsseitigen Ende der Antriebswelle 112 drehfest auf der Antriebswelle 112 angeordnet.

In der Antriebswelle 112 ist mindestens ein Wärmerohr 130 zur Ableitung von Wärme aus dem Kupplungsfluid 124 zur Kühlflüssigkeit 114 angeordnet. Beispielsweise steht das kupplungsseitige Ende des Wärmerohrs 130 über die Innenlamellen 126 in Wärmeaustausch mit dem Kupplungsfluid 124 als Wärmequelle. Das pumpenseitige Ende des Wärmerohrs 130 steht über das Laufrad 110 in Wärmeaustausch mit der Kühlflüssigkeit 114 als Wärmesenke.

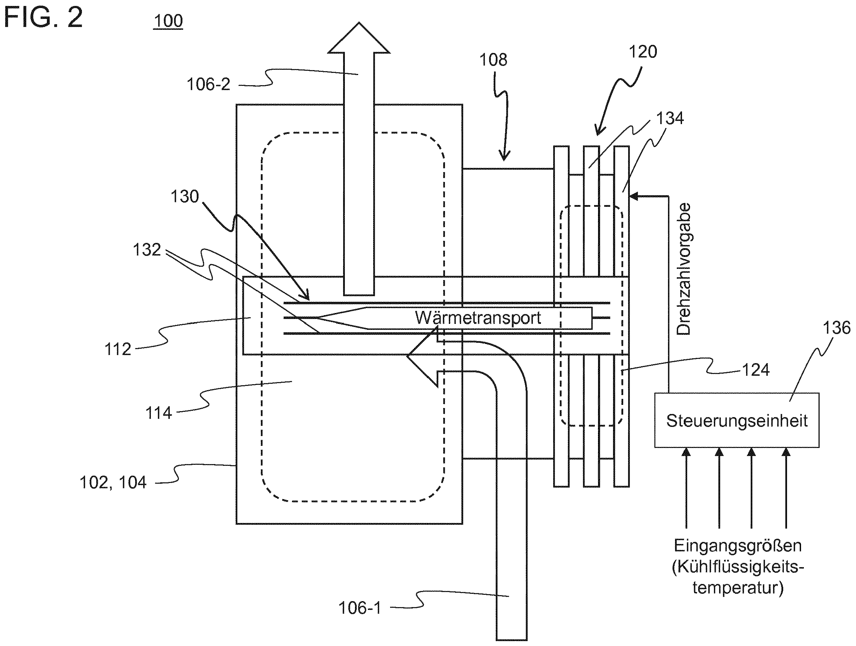

Figur 2 zeigt ein schematisches Blockschaltbild eines zweiten Ausführungsbeispiels der Brennkraftmaschine 100. Einzelne Merkmale des zweiten Ausführungsbeispiels sind mit jenen des ersten Ausführungsbeispiels kombinierbar und/oder können diese ersetzen. Insbesondere sind entsprechende oder austauschbare Merkmale mit übereinstimmenden Bezugszeichen versehen.

Um die Effektivität der Wärmeübertragung zwischen Kupplungsfluid 124 und Kühlflüssigkeit 114 zu verbessern im Wärmerohr 130 ist ein thermisch konvektierendes Kühlmedium als Kühlmittel verwendet. Als Kühlmedium kommen organische und/oder anorganische Kühlmittel (die beispielsweise auch als Kältemittel verwendet werden könne) zum Einsatz. Ein kupplungsseitiges erstes Ende des Wärmerohrs, das mit der Visco-Kupplung 120 (genauer: dem Kupplungsfluid 124) als Wärmequelle in Wärmekontakt steht, dient als Verdampfer des Kühlmediums im Wärmerohr 130. Ein pumpenseitiges zweites, dem ersten Ende gegenüberliegendes Ende des Wärmerohrs 130 steht mit der Kühlflüssigkeitspumpe 108 (genauer: der Kühlflüssigkeit 114) als Wärmesenke in Wärmekontakt und dient als Kondensator des Kühlmediums.

Vorzugsweise umfasst das Wärmerohr 130 eine Kapillare 132 oder mehrere Kapillaren 132, in die das Kühlmedium eingeschlossen ist. Durch Kapillarkräfte fließt das Kühlmedium im flüssigen Aggregatszustand vom pumpenseitigen zweiten Ende zum kupplungsseitigen ersten Ende. Somit ist eine Rezirkulation des Kühlmediums für einen effektiven Wärmetransport längs der Antriebswelle 112 erreicht.

Das in der Antriebswelle 112 eingebaute Wärmerohr 130 ermöglicht eine nahezu konstante Temperatur des Kupplungsfluids 124 aufgrund der engen thermischen Anbindung an die geregelte Temperatur der Kühlflüssigkeit 114. Da die Temperatur des Kupplungsfluids 124 den Wirkungsgrad der Visco-Kupplung 120 beeinflusst, wird ein hitzebedingter Schlupfeffekt vermieden oder deutlich reduziert.

Im Gegensatz zu einer konventionellen Kühlung einer Visco-Kupplung, beispielsweise nur mit Kühlluft durch Vergrößerung einer Kontaktoberfläche der Visco-Kupplung, ermöglicht die effektive thermische Anbindung an die Kühlflüssigkeit 114 eine Reduzierung der Kühlrippen 134 an der Visco-Kupplung 120 oder einen Verzicht auf solche Kühlrippen 134. Dadurch können Herstellungskosten der Visco-Kupplung 120 und das Gewicht der Visco-Kupplung 120 reduziert werden.

Durch die Integration des Wärmerohrs 130 in die Antriebswelle 112 ist eine herkömmliche Luftkühlung der Visco-Kupplung 120 nicht mehr nötig oder kann deutlich reduziert werden. Die Kosten und der Bauraum für die Visco-Kupplung 120 sind dadurch reduziert. Eine Lebensdauer der Visco-Kupplung 120 kann aufgrund der stabilen konstanten Temperatur des Kupplungsfluids 124 gegenüber herkömmlichen Visco-Kupplungen verlängert sein.

In jedem Ausführungsbeispiel kann die Brennkraftmaschine 100 eine Steuerungseinheit 136 umfassen, welche die Drehzahl der Kühlflüssigkeitspumpe 108 mittels der Visco-Kupplung 120 steuert. Da die Steuerung der Pumpendrehzahl abhängig ist von Eingangsgrößen der Steuerungseinheit 136, wie beispielsweise der gemessenen Temperatur der Kühlflüssigkeit 114 und/oder einem gemessenen Temperaturgradienten im Zylinderkopf 102 und/oder Motorblock 104, ist diese Temperatur bzw. dieser Temperaturgradient geregelt. Die Steuerungseinheit 136 kann als Regelung der Drehzahl der Kühlflüssigkeitspumpe 108 bezeichnet werden.

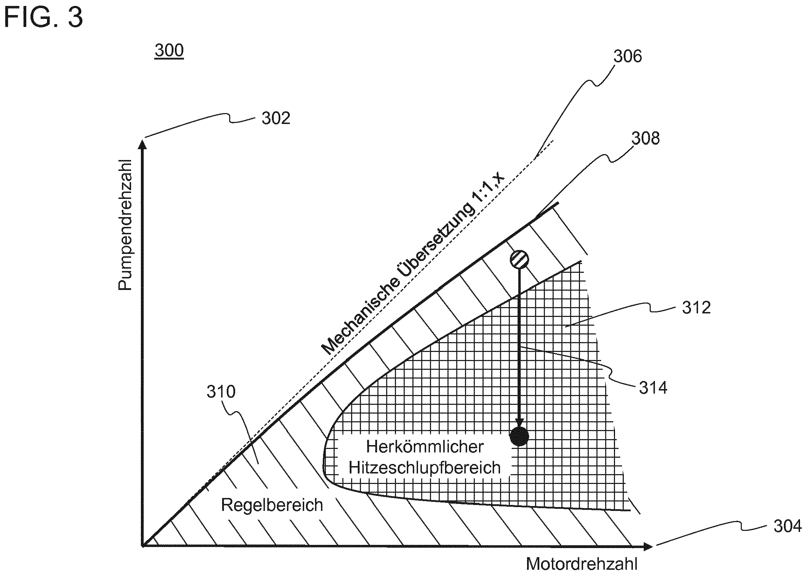

Figur 3 zeigt ein schematisches Drehzahldiagramm 300 zur Regelung der Visco-Kupplung 120, und damit der Drehzahl 302 der Kühlflüssigkeitspumpe 108. Die im Diagramm 300 schematisch dargestellte Regelung ist auf jedes Ausführungsbeispiel der Brennkraftmaschine 100 anwendbar.

Auf einer horizontalen Achse ist die Drehzahl 304 der Brennkraftmaschine (d.h. die Drehzahl der Kurbelwelle) abgetragen. Die Ursprungsgerade 306 stellt das mechanische Übersetzungsverhältnis (beispielsweise 1:1,8 gegenüber der Kurbelwelle), d.h. die Drehzahl des Antriebs 122 der Visco-Kupplung 120, dar. Aufgrund des auch bei maximal gekoppelterVisco-Kupplung 120 zur Drehmomentübertragung notwendigen Schlupfs ist die Maximaldrehzahl 308 abtriebsseitig der Visco-Kupplung 120, d.h. die Maximaldrehzahl 308 der Antriebswelle 112, kleiner als die Drehzahl 306. Dieser Mindestschlupf ist bei geringer Last bzw. Motordrehzahl 304 verschwindend und nimmt mit der Last bzw. Motordrehzahl 304 zu.

Durch die feste thermische Anbindung des Kupplungsfluids 124 über das Wärmerohr 130 an die Kühlflüssigkeit 114 kann der gesamte Regelbereich 310 unterhalb der Maximaldrehzahl 308 der Steuerungseinheit 136 zur Regelung der Visco-Kupplung 120 zur Verfügung stehen. Eine Einschränkung des Regelbereichs 310 durch einen herkömmlichen Hitzeschlupfbereich (auch: Heat-Slip-Bereich) kann durch die thermische Anbindung über das Wärmerohr 130 entfallen.

Der herkömmliche Hitzeschlupfbereich 312 kann durch eine hohe Wärmeleistung bei hoher Motordrehzahl 304 und/oder hohen Scherkräften (d.h., hohem Lastmoment) im Kupplungsfluid einer herkömmlichen Visco-Kupplung (beispielsweise nur mit Luftkühlung) auftreten und zu einem unkontrollierten Temperaturanstieg im Kupplungsfluid 124 führen, sodass aufgrund der mit der Temperatur abfallenden Viskosität und/oder einer Überhitzung des Kupplungsfluids 124 der herkömmliche Hitzeschlupfbereich 312 bei der Regelung einer herkömmlichen Visco-Kupplung nicht zur Verfügung steht.

Aufgrund der über das mindestens eine Wärmerohr 130 kontrollierten Temperatur des Kupplungsfluids 124 kann der Hitzeschlupfbereich reduziert oder irrelevant für den Regelbereich 310 sein. Dadurch ist, beispielsweise bei einer großen Motordrehzahl 304 und einem geringen Leistungsbedarf der Kühlflüssigkeitspumpe 108 (beispielsweise bei einer Autobahnfahrt mit horizontaler Fahrbahn oder mit Gefälle) eine Reduzierung 314 der Pumpendrehzahl 302, und damit eine Kraftstoffeinsparung, ermöglicht. Diese Möglichkeit steht bei einer herkömmlichen Visco-Kupplung aufgrund des herkömmlichen Hitzeschlupfbereichs 312 der Regelung nicht zur Verfügung.

Obwohl die Erfindung in Bezug auf exemplarische Ausführungsbeispiel beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um die Lehre der Erfindung an Leistungsbereiche oder Anwendungen der Brennkraftmaschine anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Brennkraftmaschine
- 102: Zylinderkopf der Brennkraftmaschine
- 104: Motorblock der Brennkraftmaschine
- 106: Kühlflüssigkeitskreislauf
- 108: Kühlflüssigkeitspumpe des Kühlflüssigkeitskreislaufs
- 110: Laufrad der Kühlflüssigkeitspumpe
- 112: Antriebswelle der Kühlflüssigkeitspumpe
- 114: Kühlflüssigkeit
- 116: Radiator des Kühlflüssigkeitskreislaufs
- 118: Thermostat des Kühlflüssigkeitskreislaufs
- 120: Visco-Kupplung
- 122: Antrieb der Visco-Kupplung
- 124: Kupplungsfluid
- 126: Innenlamellen der Visco-Kupplung
- 128: Außenlamellen der Visco-Kupplung
- 130: Wärmerohr
- 132: Kapillare des Wärmerohrs
- 134: Kühlrippen der Visco-Kupplung
- 136: Steuerungseinheit
- 300: Drehzahldiagramm
- 302: Pumpendrehzahl
- 304: Motordrehzahl
- 306: Antriebseitige Drehzahl der Visco-Kupplung
- 308: Abtriebseitige Maximaldrehzahl der Visco-Kupplung
- 310: Regelbereich der Visco-Kupplung
- 312: Herkömmlicher Hitzeschlupfbereich
- 314: Reduktion der Pumpendrehzahl

## Patentansprüche

1. Brennkraftmaschine (100), insbesondere eines Kraftfahrzeugs, umfassend:
einen Kühlflüssigkeitskreislauf (106-1, 106-2), der an einen Zylinderkopf (102) und/oder einen Motorblock (104) der Brennkraftmaschine (100) angeschlossen oder anschließbar ist und eine Kühlflüssigkeitspumpe (108) umfasst, die eine Antriebswelle (112) umfasst und dazu ausgebildet ist, Kühlflüssigkeit (114) im Kühlflüssigkeitskreislauf (106-1, 106-2) zu fördern; und
eine Visco-Kupplung (120), die zum Antrieb (122) durch die Brennkraftmaschine (100) angeordnet oder anordenbar ist, ein Kupplungsfluid (124) zur Drehmomentübertragung umfasst und abtriebsseitig mit der Antriebswelle (112) der Kühlflüssigkeitspumpe (108) verbunden ist,
**dadurch gekennzeichnet, dass** die Antriebswelle (112) der Kühlflüssigkeitspumpe (108) mindestens ein Wärmerohr (130) umfasst, das mit dem Kupplungsfluid (124) als Wärmequelle und der Kühlflüssigkeit (114) als Wärmesenke in Wärmeaustausch steht oder bringbar ist.

2. Brennkraftmaschine nach Anspruch 1, wobei die Visco-Kupplung (120) vom Kupplungsfluid (124) umspülte Lamellen (126) umfasst, die drehfest mit der Antriebswelle (112) verbunden sind und über die das Wärmerohr (130) in Wärmeaustausch mit dem Kupplungsfluid (124) als Wärmequelle steht.

3. Brennkraftmaschine nach Anspruch 1 oder 2, wobei die Kühlflüssigkeitspumpe (108) ein von der Kühlflüssigkeit (114) umspültes Laufrad (110) umfasst, das drehfest mit der Antriebswelle (112) verbunden ist und über die das Wärmerohr (130) in Wärmeaustausch mit der Kühlflüssigkeit (114) als Wärmesenke steht.

4. Brennkraftmaschine nach einem der Ansprüche 1 bis 3, wobei der Kühlflüssigkeitskreislauf (106-1, 106-2) ferner einen Radiator (116) und einen Thermostat (118) umfasst.

5. Brennkraftmaschine nach einem der Ansprüche 1 bis 4, wobei das Wärmerohr (130) eine Kapillare (132) oder mehrere Kapillaren (132) umfasst, die sich in Längsrichtung der Antriebswelle (112) erstreckt oder erstecken.

6. Brennkraftmaschine nach Anspruch 5, wobei die Kapillare (132) oder mindestens eine der Kapillaren (132) des Wärmerohrs (130) koaxial zur Antriebswelle (112) angeordnet ist.

7. Brennkraftmaschine nach Anspruch 5 oder 6, wobei die mindestens eine Kapillare (132) ein Medium umfasst, das dazu ausgebildet ist, durch Wärmekontakt mit der Wärmequelle zu verdampfen und durch Wärmekontakt mit der Wärmesenke zu kondensieren.

8. Brennkraftmaschine nach Anspruch 7, wobei das Wärmerohr (130) ein geschlossenes System ist, welches das Medium beinhaltet.

9. Brennkraftmaschine nach einem der Ansprüche 1 bis 8, wobei ein Wärmewiderstand einer Wärmeleitung im Metall der Antriebswelle (112) mehrfach größer ist als ein Wärmewiderstand eines Wärmetransports im Wärmerohr (130).

10. Brennkraftmaschine nach einem der Ansprüche 1 bis 9, ferner eine Steuereinheit (136) umfassend, die dazu ausgebildet ist, einen Kopplungsgrad der Visco-Kupplung in Abhängigkeit von einer Temperatur der Kühlflüssigkeit (114) zu regeln.

11. Brennkraftmaschine nach einem der Ansprüche 1 bis 10, wobei das Wärmerohr (130) koaxial in der Antriebswelle (112) angeordnet ist.

12. Brennkraftmaschine nach einem der Ansprüche 1 bis 11, wobei eine Wärmekapazität der Kühlflüssigkeit (114) mehrfach größer als eine Wärmekapazität des Kupplungsfluid (124) ist.

13. Kraftfahrzeug, insbesondere ein Nutzfahrzeug, umfassend eine Brennkraftmaschine (100) gemäß einem der Ansprüche 1 bis 12.

## Claims

1. An internal combustion engine (100), in particular of a motor vehicle, comprising:
a cooling liquid circuit (106-1, 106-2), which is connected or can be connected to a cylinder head (102) and/or an engine block (104) of the internal combustion engine (100) and which comprises a cooling liquid pump (108) which comprises a drive shaft (112) and which is constructed to convey cooling liquid (114) in the cooling liquid circuit (106-1, 106-2); and
a Visco clutch (120), which is arranged or can be arranged for the drive (122) by the internal combustion engine (100), which comprises a clutch fluid (124) for torque transmission and which is connected at the output side to the drive shaft (112) of the cooling liquid pump (108),
**characterized in that** the drive shaft (112) of the cooling liquid pump (108) comprises at least one heat pipe (130) which is or can be brought into heat exchange with the clutch fluid (124) as a heat source and the cooling liquid (114) as a heat sink.

2. The internal combustion engine according to Claim 1, wherein the Visco clutch (120) comprises plates (126) around which the clutch fluid (124) flows and which are connected to the drive shaft (112) in a rotationally secure manner and via which the heat pipe (130) is in heat exchange with the clutch fluid (124) as a heat source.

3. The internal combustion engine according to Claim 1 or 2, wherein the cooling liquid pump (108) comprises an impeller (110) around which the cooling liquid (114) flows and which is connected to the drive shaft (112) in a rotationally secure manner and via which the heat pipe (130) is in heat exchange with the cooling liquid (114) as a heat sink.

4. The internal combustion engine according to any one of Claims 1 to 3, wherein the cooling liquid circuit (106-1, 106-2) further comprises a radiator (116) and a thermostat (118).

5. The internal combustion engine according to any one of Claims 1 to 4, wherein the heat pipe (130) comprises a capillary (132) or a plurality of capillaries (132) which extend(s) in the longitudinal direction of the drive shaft (112).

6. The internal combustion engine according to Claim 5, wherein the capillary (132) or at least one of the capillaries (132) of the heat pipe (130) is/are arranged coaxially relative to the drive shaft (112).

7. The internal combustion engine according to Claim 5 or 6, wherein the at least one capillary (132) comprises a medium which is constructed to evaporate as a result of thermal contact with the heat source and to condense as a result of thermal contact with the heat sink.

8. The internal combustion engine according to Claim 7, wherein the heat pipe (130) is a closed system which contains the medium.

9. The internal combustion engine according to any one of Claims 1 to 8, wherein a thermal resistance of a heat line in the metal of the drive shaft (112) is many times greater than a thermal resistance of a heat transport in the heat pipe (130).

10. The internal combustion engine according to any one of Claims 1 to 9, further comprising a control unit (136) which is constructed to control a degree of coupling of the Visco clutch in accordance with a temperature of the cooling liquid (114).

11. The internal combustion engine according to any one of Claims 1 to 10, wherein the heat pipe (130) is arranged coaxially in the drive shaft (112).

12. The internal combustion engine according to any one of Claims 1 to 11, wherein a thermal capacity of the cooling liquid (114) is many times greater than a thermal capacity of the clutch fluid (124).

13. A motor vehicle, in particular a utility vehicle, comprising an internal combustion engine (100) according to any one of Claims 1 to 12.

## Revendications

1. Moteur à combustion interne (100), en particulier pour un véhicule automobile, comprenant :
un circuit de liquide de refroidissement (106-1, 106-2) qui est ou peut être raccordé à une culasse (102) et/ou à un bloc-moteur (104) du moteur à combustion interne (100) et qui comprend une pompe de liquide de refroidissement (108) qui comprend un arbre d'entraînement (112) et qui est réalisée pour refouler du liquide de refroidissement (114) dans le circuit de liquide de refroidissement (106-1, 106-2) ; et
un visco-embrayage (120) qui est ou peut être disposé en vue de l'entraînement (122) par le moteur à combustion interne (100), qui comprend un fluide d'embrayage (124) pour le transfert de couple et qui est connecté du côté de la prise de force à l'arbre d'entraînement (112) de la pompe de liquide de refroidissement (108),
**caractérisé en ce que** l'arbre d'entraînement (112) de la pompe de liquide de refroidissement (108) comprend au moins un tube de transfert thermique (130) qui est ou peut être amené en échange thermique avec le fluide d'embrayage (124) en tant que source de chaleur et avec le liquide de refroidissement (114) en tant que puits thermique.

2. Moteur à combustion interne selon la revendication 1, dans lequel le visco-embrayage (120) comprend des lamelles (126) autour desquelles circule le fluide d'embrayage (124), lesquelles sont connectées de manière solidaire en rotation à l'arbre d'entraînement (112) et par le biais desquelles le tube de transfert thermique (130) est en échange thermique avec le fluide d'embrayage (124) en tant que source de chaleur.

3. Moteur à combustion interne selon la revendication 1 ou 2, dans lequel la pompe de liquide de refroidissement (108) comprend une roue mobile (110) autour de laquelle circule le liquide de refroidissement (114), laquelle est connectée de manière solidaire en rotation à l'arbre d'entraînement (112) et par le biais de laquelle le tube de transfert thermique (130) est en échange thermique avec le liquide de refroidissement (114) en tant que puits thermique.

4. Moteur à combustion interne selon l'une quelconque des revendications 1 à 3, dans lequel le circuit de liquide de refroidissement (106-1, 106-2) comprend en outre un radiateur (116) et un thermostat (118).

5. Moteur à combustion interne selon l'une quelconque des revendications 1 à 4, dans lequel le tube de transfert thermique (130) comprend un capillaire (132) ou plusieurs capillaires (132) qui s'étend ou s'étendent dans la direction longitudinale de l'arbre d'entraînement (112).

6. Moteur à combustion interne selon la revendication 5, dans lequel le capillaire (132) ou au moins l'un des capillaires (132) du tube de transfert thermique (130) est disposé coaxialement par rapport à l'arbre d'entraînement (112).

7. Moteur à combustion interne selon la revendication 5 ou 6, dans lequel l'au moins un capillaire (132) comprend un milieu qui est réalisé pour s'évaporer par contact thermique avec la source de chaleur et pour se condenser par contact thermique avec le puits de chaleur.

8. Moteur à combustion interne selon la revendication 7, dans lequel le tube de transfert thermique (130) est un système fermé qui contient le milieu.

9. Moteur à combustion interne selon l'une quelconque des revendications 1 à 8, dans lequel une résistance thermique d'une conduction thermique dans le métal de l'arbre d'entraînement (112) est plusieurs fois supérieure à une résistance thermique d'un transfert thermique dans le tube de transfert thermique (130).

10. Moteur à combustion interne selon l'une quelconque des revendications 1 à 9, comprenant en outre une unité de commande (136) qui est réalisée pour réguler un degré d'accouplement du visco-embrayage en fonction d'une température du liquide de refroidissement (114).

11. Moteur à combustion interne selon l'une quelconque des revendications 1 à 10, dans lequel le tube de transfert thermique (130) est disposé coaxialement dans l'arbre d'entraînement (112).

12. Moteur à combustion interne selon l'une quelconque des revendications 1 à 11, dans lequel une capacité thermique du liquide de refroidissement (114) est plusieurs fois supérieure à une capacité thermique du fluide d'embrayage (124).

13. Véhicule automobile, en particulier véhicule utilitaire comprenant un moteur à combustion interne (100) selon l'une quelconque des revendications 1 à 12.
